# EUROPEAN PATENT APPLICATION

(11) **EP 2 800 022 A1**
(43) Date of publication of application: **05.11.2014**
(21) Application number: 12863824.4
(22) Date of filing: 30.11.2012
(51) Int. Cl.: G06F 21/00, G06F 21/30, G06F 21/10

(54) **SYSTEM AND METHOD FOR CONTROLLING APPLET ACCESS**

(30) Priority: 30.12.2011 US 201161581858 P
(71) Applicant: SK C&C Co., Ltd., Seongnam-si, Gyeonggi-do 463-844 (KR)
(72) Inventor: KWON, Yong Sung, Alpharetta, Georgia 30004 (US); ZHU, Kevin, Marietta, Georgia 30068 (US)
(74) Representative: Walaski, Jan Filip
(86) International application number: PCT/KR2012/010323
(87) International publication number: WO 2013/100419

(57) **Abstract**

A system and method for controlling access to an applet is provided. According to the applet access control method, when an application requests a management program for access to an applet stored in an SE, the management program controls access of the application to the requested applet. Accordingly, since an application that has no access right is prohibited from accessing an applet, security for information stored in the applets can be increased.

## Description

### Technical Field

The present invention relates to a system and method for controlling access to an applet in a Secure Element (SE).

### Background Art

Conventionally, mobile terminals include an internal memory and an SE. In this case, one or more SEs may be included in the mobile terminal. The internal memory may generally be used to store data related to the mobile terminal as well as applications. However, certain types of information, which may require security, may be stored in the SE for secure storage. The information stored in the SE may be limited in its access due to security concerns. The information stored in the SE may include information related to credit cards, personal data, financial data, and other sensitive information.

Because of the sensitivity of information stored in the SE, theft or loss of the SE may lead to unintended information leakage or financial incident. In addition, there may be a risk that malware may attempt to gain access to the information stored in the SE without authorization or approval of the owner of the mobile terminal.

### Disclosure

### Technical Problem

An aspect of the present invention is to solve at least the above-mentioned problems and/or disadvantages and to provide at least the advantages described below. Accordingly, an aspect of the present invention is to provide a system and method for controlling/restricting access to information stored in an SE.

### Technical Solution

According to an aspect of an exemplary embodiment, there is provided a mobile terminal including: an application to request access to an applet stored in an SE, a management application to communicate with a management applet for managing access to the applet, and an applet to store secure information (information requiring security).

According to an aspect of another exemplary embodiment, there is provided a method for securing access to an SE, the method including: requesting access to an applet stored in the SE by an application; establishing communication with a management applet by a management application; determining whether the application has access to the requested applet by the management applet; and allowing access to the applet in response to a determination that the application has access to the requested applet.

According to an aspect of another exemplary embodiment, there is provided a method for establishing secure connection to an SE, the method including: requesting access to an applet stored in the SE; communicating with a management applet stored in the SE; determining whether the applet can be accessed; and establishing connection with the applet.

According to an aspect of another exemplary embodiment, there is provided a method for controlling access to an applet, the method including: requesting by an application, a management program for access to an applet stored in an SE; and controlling by the management program, access of the application to the requested applet.

The application may be installed in a memory, and the management program may include a management application installed in the memory and a management applet installed in the SE. The controlling may be performed by an interaction between the management application and the management applet.

The requesting may include requesting by the application, the management application for access to the applet, and the controlling may include: establishing by the management application, communication with the management applet; transmitting by the management application, the request for access of the application to the management applet; and determining by the management applet, whether the application is authorized to access the requested applet.

The controlling may include: when it is determined that the application is authorized to access, transmitting by the management application, the request for access to the requested applet; transmitting by the management application, an access acceptance response to the application; and establishing by the application, communication with the requested applet.

The application may communicate with the requested applet via the management application.

The controlling may include: when it is determined that the application is not authorized to access, disregarding by the management application, the request for access; and transmitting by the management application, an access denial response to the application.

The application may not be able to access the management applet.

The application may be a wallet application and the applet may be a financial service applet.

According to an aspect of another exemplary embodiment, there is provided a mobile terminal including: a storage in which an application which requests a management program for access to an applet stored in an SE is installed; and a processor configured to execute the management program which controls the application and access of the application to the requested applet.

### Advantageous Effects

As described above, according to exemplary embodiments, an application which requests access to an applet can be controlled to access the applet based on its access right to the applet. Accordingly, since an application that has no access right is prohibited from accessing an applet, security for information stored in the applets can be increased.

In addition, according to exemplary embodiments, access right is stored and managed in an SE and thus security can be increased. Since access is controlled by an interaction between a management application installed in a memory and a management applet installed in an SE, malicious access can be prevented.

### Description of Drawings

FIG. 1 is a block diagram illustrating a software configuration of a mobile terminal according to an exemplary embodiment of the present invention;
FIG. 2 is a flowchart illustrating an access success process in an SE applet access control method according to an exemplary embodiment of the present invention;
FIG. 3 is a flowchart illustrating an access failure process in an SE applet access control method according to an exemplary embodiment of the present invention;
FIG. 4 is a flowchart illustrating an SE applet access control procedure according to an exemplary embodiment of the present invention;
FIG. 5 is a sequence diagram illustrating an SE applet access control procedure according to an exemplary embodiment of the preset invention; and
FIG. 6 is a block diagram illustrating a hardware configuration of a mobile terminal according to an exemplary embodiment of the present invention.

### Best Mode

The invention is described more fully hereinafter with reference to the accompanying drawings, in which embodiments of the invention are shown. This invention may, however, be embodied in many different forms and should not be construed as limited to the embodiments set forth herein.

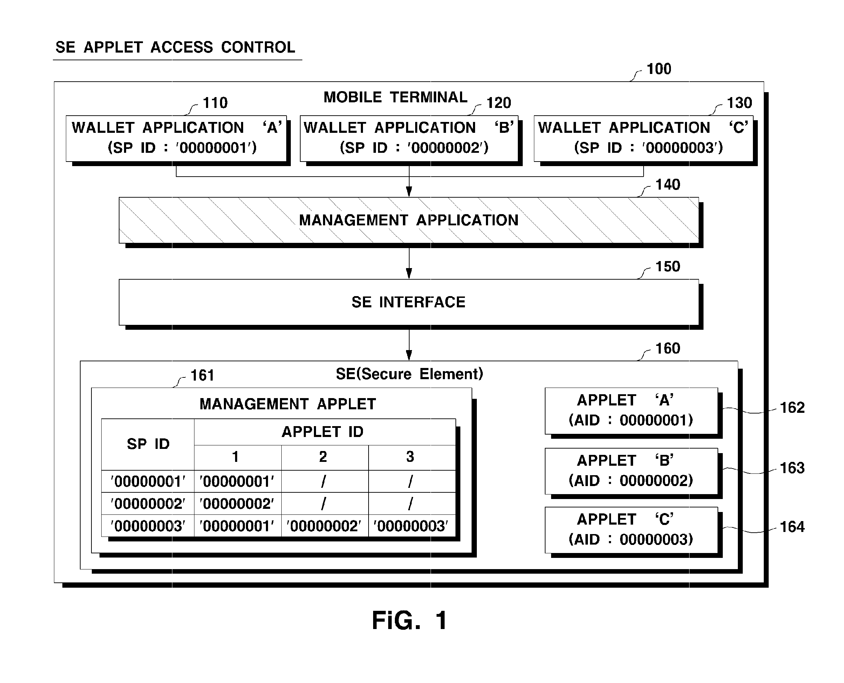

FIG. 1 is a block diagram illustrating a mobile terminal according to an exemplary embodiment of the present invention.

As shown in FIG. 1, the mobile terminal 100 includes a wallet application 'A' 110, a wallet application 'B' 120, a wallet application 'C'130 (collectively referred to as wallet applications), a management application 140, a Secure Element (SE) interface 150, and an SE 160. The SE 160 includes a management applet 161, an applet 'A' 162, an applet 'B' 163, and an applet 'C' 164.

The wallet application may request access to an applet stored in the SE 160. The wallet application has an identifier (ID) or a Service Provider IDentification (SP ID). Referring to FIG. 1, the wallet application 'A' 110 has an SP ID of 00000001, the wallet application 'B' 120 has an SP ID of 00000002, and the wallet application 'C' 130 has an SP ID of 00000003.

In addition, an applet stored in the SE 160 has an Applet ID (AID). Referring to FIG. 1 again, the applet 'A' 162 has an AID of 00000001, the applet 'B' 163 has an AID of 00000002, and the applet 'C' 164 has an AID of 00000003.

An application residing within the mobile terminal (e.g., the wallet application 'A' 110, the wallet application 'B' 120, and the wallet application 'C' 130) may have access to one or more applets stored in the SE 160.

Specifically, as shown in FIG. 1, the wallet application 'A' 110 with the SP ID of 00000001 has access to the applet 'A' 162 with the AID of 00000001, and the wallet application 'B' 120 with the SP ID of 00000002 has access to the applet 'B' 163 with the AID of 00000002. The wallet application 'C' 130 with the SP ID of 00000003 has access to the applet 'A' 162 with the AID of 00000001, applet 'B' 163 with the AID of 00000002, and applet 'C' 164 with the AID of 00000003.

The application may access an applet that the application has access right to from among the applets stored in the SE 160, but may not access an applet that the application has no access right to. For example, the wallet application 'A' 110 may access the applet 'A' 162 but not applet 'B' 163. The applet may store financial information such as a Personal Identification Number (PIN), a security code, and other sensitive information along with other kinds of information.

When the user executes the wallet application 'A' 110, the wallet application 'A' 110 may request access to the related applet, applet 'A' 162, stored in the SE 160 to display account information, which is a kind of financial information stored in the applet, to the user. The account information may include, without limitation, current balance, upcoming payments, past transactions, and the like.

The management application 140 may interact with the management applet 161 to manage access to information of the SE 160 and access of applications stored in the mobile terminal. That is, referring to FIG. 1, the management application 140 may access the applets stored in the SE 160 and manage at least one of the wallet application 'A' 110, the wallet application 'B' 120, and the wallet application 'C' 130.

Specifically, when the user executes the wallet application 'A' 110 to access the applet A 162 stored in the SE 160, the management application 140 may determine whether the requesting wallet application A has access to the applet A 162.

To achieve this, the management application 140 may identify the SP ID of the application which requested access to the applet, and establish communication with the management applet 161 residing in the SE 160 via the SE interface 150.

In response to this, the management applet 161 may identify the AID of the requested applet and determine whether the AID of the requested applet is related to the SP ID of the requesting application. When the two identifiers are related to each other, the management applet 161 determines that the requesting application has access to the requested applet.

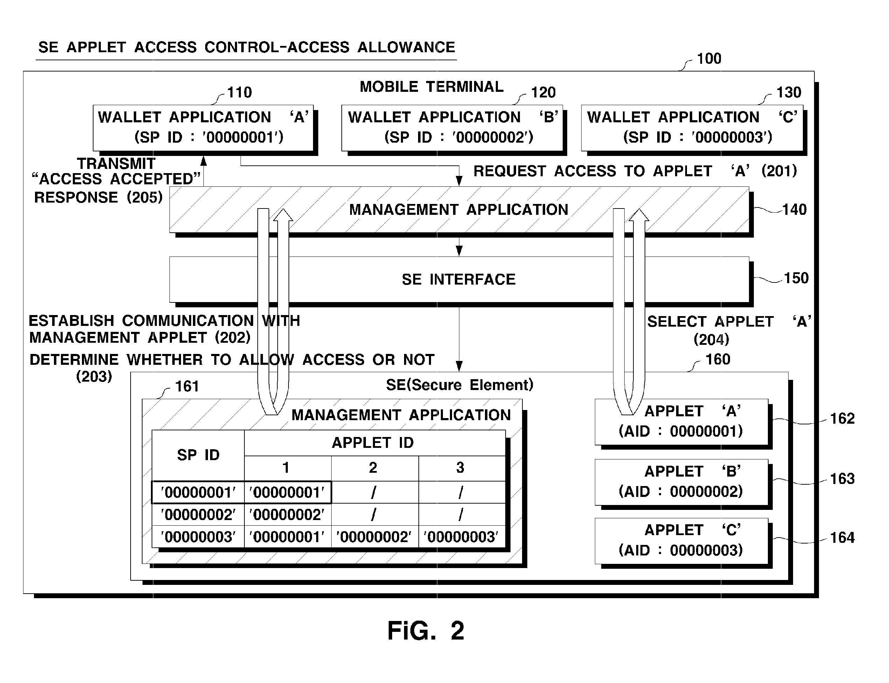

FIG. 2 is a flowchart illustrating an access success process in am SE applet access control method according to an exemplary embodiment of the present invention.

In operation 201, a user may execute a wallet application 'A' on a mobile terminal, which requests access to an applet 'A' stored in an SE. Accordingly, the wallet application 'A' may request access to an applet with an AID of 00000001 through a management application.

In operation 202, the management application establishes communication with a management applet stored in the SE. The management application may store/manage SP IDs of applications (including the wallet application 'A') stored in the mobile terminal, as described above. In FIG. 2, the identifier for the wallet application 'A' is shown as 00000001. In addition, the management applet may store/manage AIDs of the applets stored in the SE as well as access right of the applications, as described above.

In operation 203, it is determined whether the SP ID of the application and the AID of the related applet are related to each other or not. When it is determined that the requesting application, wallet application A, has access to the requested applet, applet A, the requesting application may access information stored in the requested applet.

For operation S203, the management application may relay an access request including the SP ID of the requesting application and the AID of the requested applet to the management applet. In response, when the management applet may determine that the SP ID of the application and the AID of the applet are related to each other by cross-referring to the SP ID and the AID, it may be determined that the requesting application may access the information stored in the requested applet.

As shown in FIG. 2, the SP ID of 00000001 for the wallet application 'A' is related to the AID of 00000001 for the applet 'A'. Accordingly, the management application may determine that the wallet application 'A' has access to the applet 'A' and allow access.

When the access to the applet 'A' is granted, the management application relays the access request to the applet A and selects the applet A in operation 204. In operation 205, the management application transmits an "access accepted" response to the wallet application 'A'.

When the SP ID of the requesting application and the AID of the requested applet do not match, access may be denied.

Accordingly, a particular service provider may only access a service applet that the service provider is authorized to access, and is not allowed to access unauthorized information of other service providers. Thus, security may be increased since the likelihood that the service provider's own applet information becomes exposed to other service providers is reduced.

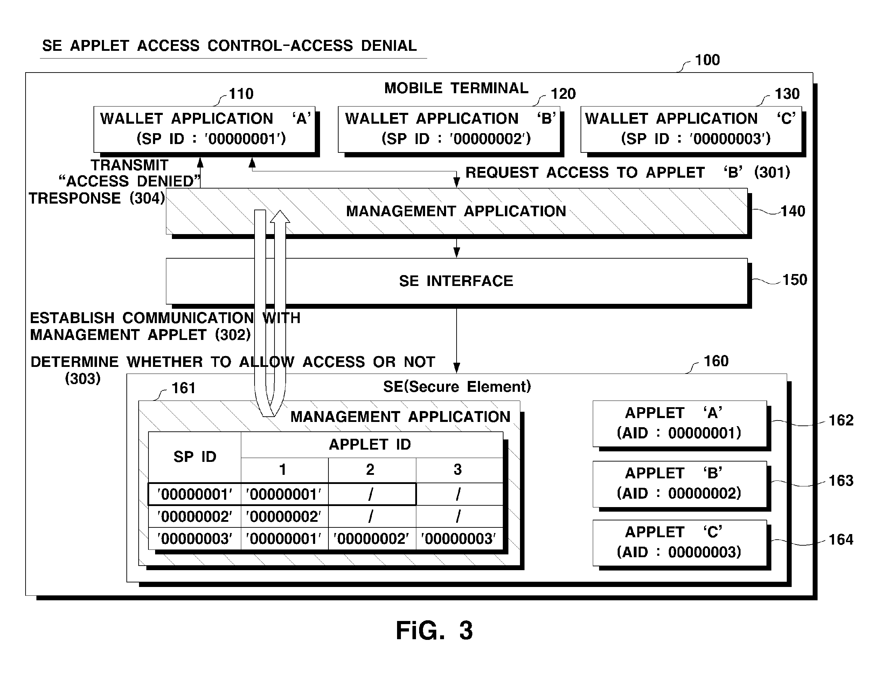

FIG. 3 is a flowchart illustrating an access failure process in an SE applet access control method according to an exemplary embodiment of the present invention.

In operation 301, a user may execute a wallet application 'A' on a mobile terminal, which requests access an applet 'B' stored in an SE. Accordingly, the wallet application 'A' may request access to the applet with an AID of 00000002 through a management application.

In operation 302, the management application establishes communication with a management applet stored in the SE. The management application may store/manage SP IDs of applications (including the wallet application A) stored in the mobile terminal, as described above. In FIG. 3, the identifier for the wallet application 'A' is shown as 00000001. In addition, the management applet may store/manage AIDs of the applets stored in the SE as described above. In FIG. 3, the identifier for the applet 'B' is shown as 00000002.

In operation 303, the SP ID for the wallet application and the AID for the related applet are compared. When the management application determines that the requesting application, wallet application A, has access to the requested applet, applet 'B', the requesting application may access the information stored in the requested applet.

For operation 303, when the management application may relay an access request including the SP ID of the requesting application and the AID of the requested applet to the management applet, the management applet may determine whether the SP ID of the application and the AID of the requested applet are related to each other by cross-referring to the SP ID and the AID. When it is determined that the SP ID and the AID are related to each other, it is determined that the requesting application may access the information stored in the requested applet.

Alternatively, when the SP ID and the AID are not related to each other, it may be determined that the requesting application may not access the information stored in the requested applet.

As shown in FIG. 3, the SP ID of 00000001 for the wallet application 'A' is related to the AID of 00000001 for the applet 'A', but is not related to the AID of 00000002 for the applet 'B'. Accordingly, the management application determines that the wallet application 'A' does not have access to the applet 'B' and denies access. In operation 304, the management application transmits an "access denied" response to the wallet application A.

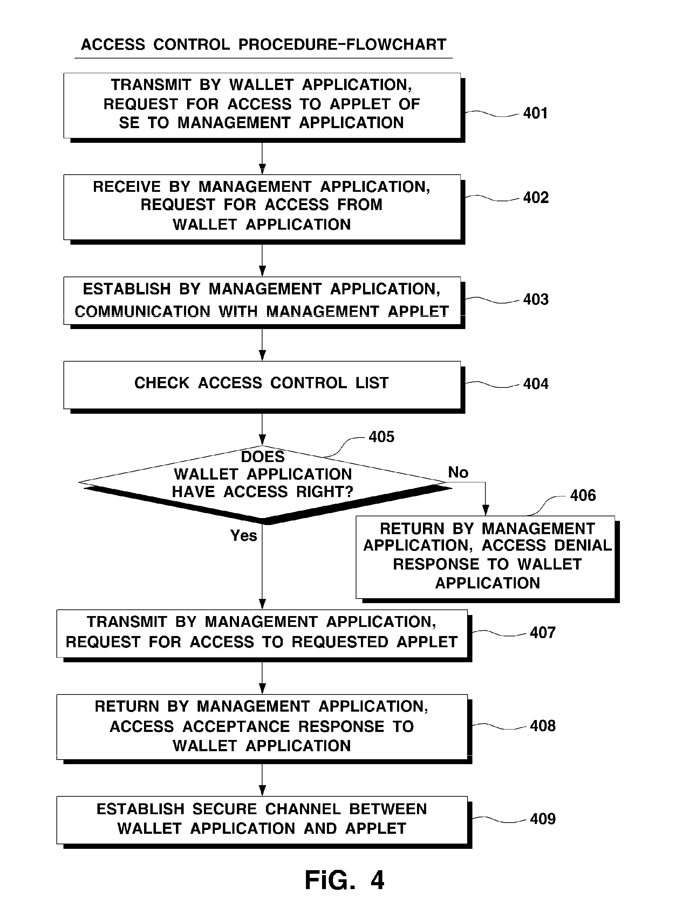

FIG. 4 is a flowchart illustrating an access control procedure according to an exemplary embodiment of the present invention.

In operation 401, a wallet application stored in a mobile terminal may attempt to access an applet stored in an SE of the mobile terminal. The applet is related to the wallet application and may include account information requiring security.

In addition, each application and applet may be identified by an SP ID and an AID, respectively. When the applet is related to an application, they may have related identifiers. For example, a wallet application 'A' may have an SP ID of '00000001' and the related applet 'A' may have an AID of '00000001' as illustrated in FIG. 1, FIG. 2, and FIG. 3.

The SP ID of the application may be managed by a management application, and the AID of the applets and their relation to the application may be managed by a management applet.

In operation 402, the management application receives a request for access from the wallet application. In operation 403, the management application establishes communication with the management applet stored in the SE.

In operation 404 and operation 405, the management application checks an access control list managed by the management applet to determine whether the requesting application has access right to the requested applet. When the SP ID of the requesting application is related to the AID of the requested applet, the management application determines that the requesting application has access right.

When it is determined that the requesting application has no such access right, the management application returns the "access denied" response to the requesting application in operation 406.

On the other hand, when it is determined that the requesting application does have such access right, the management application transmits the access request to the requested applet in operation 407.

In operation 408, the management application returns an "access accepted" response to the requesting application.

In operation 409, a secure channel is established between the requesting application and the requested applet. Accordingly, the application may access the information stored in the requested applet.

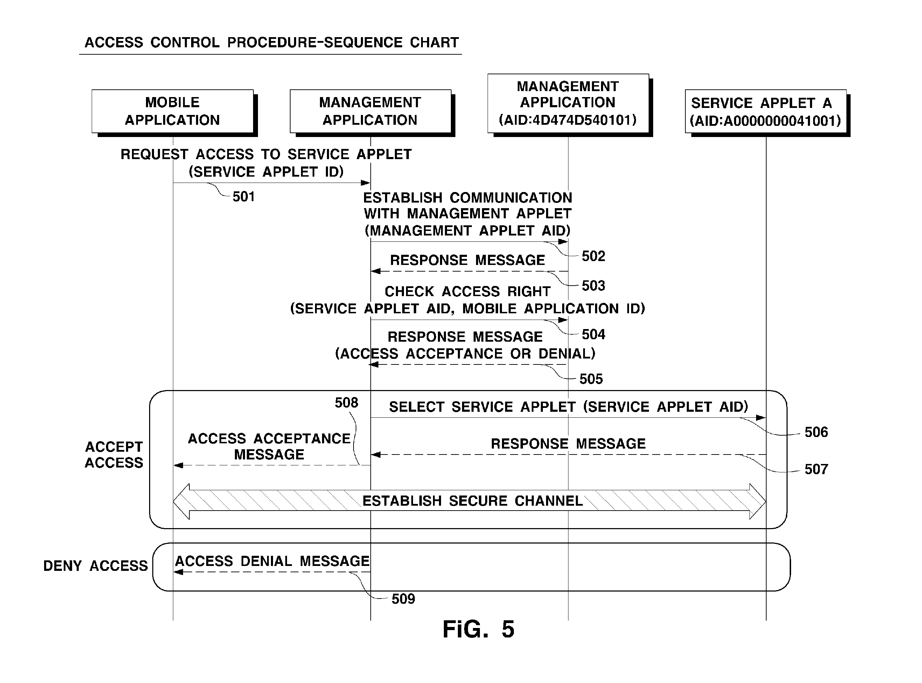

FIG. 5 is a sequence diagram illustrating an access control procedure according to an exemplary embodiment of the present invention.

In operation 501, a mobile application transmits an access request to a management application for access to a service applet A. The access request may includes an AID of the requested service applet. In FIG. 5, the service applet A has an AID of A0000000041001.

In operation 502, the management application requests to establish communication with a management applet. The management application may call (select) the management applet by using the AID of the management applet. Here, the management applet has an AID of 4D474D540101.

In operation 503, the management applet transmits a response message accepting or rejecting management application's request to establish communication.

In operation 504, when the management applet successfully establishes communication with the management application, the management application transmits the request for access to the service applet A.

In operation 505, when the management applet determines that the requesting mobile application has access right to the service applet A, a response message granting access is transmitted.

When the SP ID of the mobile application is related to the AID of the service applet A, it is determined that the mobile application has access right to the service applet A.

In operation 506, when the mobile application is determined to have the access right to the service applet A, the management application selects the requested service applet A and requests to establish connection with the requested service applet A. In operation 507, the service applet A establishes the connection requested by the management application or a response message for denying the requested connection. When the service applet A accepts the request to establish connection with the management application, the management application relays connection information to the mobile application. Once the mobile application establishes connection with the service applet A, the mobile application may access information stored in the service applet A.

On the other hand, when the management applet determines that the requesting mobile application does not have access right to the service applet A, a response message denying access is transmitted.

When it is determined that the requesting mobile application does not have an access right to the service applet A, the management applet denies access and the response message denying access is transmitted from the management application to the mobile application in operation 509.

The method for controlling/restricting access to the applet of the SE according to various exemplary embodiments has been described up to now.

In the above-described exemplary embodiments, the management application disregards the request for access to the applet that the requesting application has no access right to, and does not transmit the request for access to the applet, so that the application having no access right is prohibited from accessing the applet.

In addition, the management application and the management applet, which are installed in the memory and the SE, respectively, may configure a management program and may control an access to applets by interacting with each other. However, variations can be made. For example, functions of the management applet may be integrated to the management application and the management applet may be omitted, or functions of the management application may be integrated to the management applet and the management application may be omitted.

In the above-described exemplary embodiments, the wallet application and the financial service applet storing account information have been described. However, this is merely an example and the technical idea of the present invention can be applied to other kinds of applications in addition to the wallet application and other kinds of service applets in addition to the financial service applet.

In addition, the SP ID for identifying the application may be substituted with other kinds of IDs.

In addition, in the above-described exemplary embodiments, the management applet determines whether the requesting application has an access right to the applet, and notifies the management application of a result of the determination. However, the management application may determine whether the requesting application has an access right to the applet with the reference to the relation information stored in the management applet.

In order to increase security, applications except for the management application may be configured to be unable to access to the management applet. Furthermore, the application may be configured to communicate with the applet only via the management application.

In addition, in order to increase the level of security, the relation between applications and applets (tables shown in FIGS. 1 to 3), which is stored in the management applet, may be only updated by a Trusted Service Manager (TSM).

In addition, an application may be denied an access to an applet after a predetermined number of failed tries. The management application guides the user to check and restrict an access to all applets. This is because the application that is denied to access to applets many times is likely to be malwares.

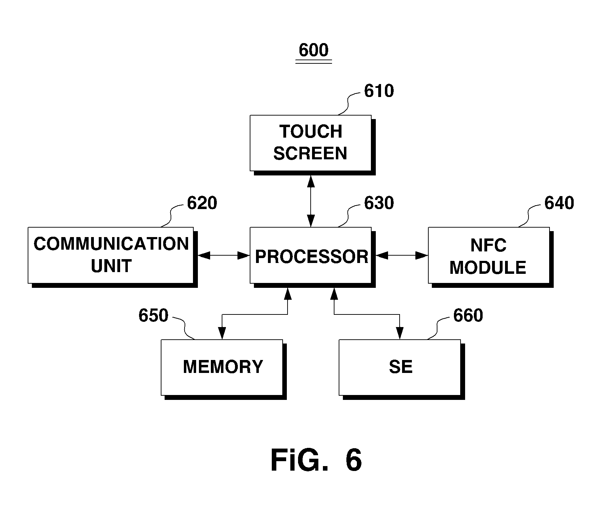

FIG. 6 is a block diagram illustrating a hardware configuration of a mobile terminal according to an exemplary embodiment of the present invention. As shown in FIG. 6, the mobile device 600 includes a touch screen 610, a wireless communication unit 620, a processor 630, a Near Filed Communication (NFC) module 640, a memory 650, and an SE 660.

The touch screen 610 functions as a display for displaying visual information (an application execution screen, account information, etc. in the above-described exemplary embodiments), and also functions as a user inputting means for receiving a user command.

The wireless communication unit 620 is a means for wirelessly networking with mobile communication, and the NFC module 640 is a module which communicates with an NFC reader of a POS and transmits payment information and other service information stored in the applets installed in the SE 660.

The memory 650 is a storage medium in which applications and a management application are installed, and the SE 660 is a storage medium in which service applets and a management applet are installed, and may be implemented by using a Universal Integrated Circuit card (UICC), an embedded SE, a Secure Digital (SD) card, and other forms of SE. The SE 660 may include the NFC module 640.

The processor 630 executes applications and a management application stored/installed in the memory 650, executes service applets and a management applet stored/installed in the SE 660, and eventually, allows the procedure shown in FIGS. 2 to 5 to be performed in the mobile terminal 600.

The foregoing exemplary embodiments and advantages are merely exemplary and are not to be construed as limiting the present inventive concept. The exemplary embodiments can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A method for controlling access to an applet, the method comprising:
requesting by an application, a management program for access to an applet stored in an SE; and
controlling by the management program, access of the application to the requested applet.

2. The method of claim 1, wherein the application is installed in a memory,
wherein the management program comprises a management application installed in the memory and a management applet installed in the SE, and
wherein the controlling is performed by an interaction between the management application and the management applet.

3. The method of claim 2, wherein the requesting comprises requesting by the application, the management application for access to the applet, and
wherein the controlling comprises:
establishing by the management application, communication with the management applet;
transmitting by the management application, the request for access of the application to the management applet; and
determining by the management applet, whether the application is authorized to access the requested applet.

4. The method of claim 3, wherein the controlling comprises:
when it is determined that the application is authorized to access, transmitting by the management application, the request for access to the requested applet;
transmitting by the management application, an access acceptance response to the application; and
establishing by the application, communication with the requested applet.

5. The method of claim 4, wherein the application communicates with the requested applet via the management application.

6. The method of claim 3, wherein the controlling comprises:
when it is determined that the application is not authorized to access, disregarding by the management application, the request for access; and
transmitting by the management application, an access denial response to the application.

7. The method of claim 1, wherein the application is not able to access the management applet.

8. The method of claim 1, wherein the application is a wallet application and the applet is a financial service applet.

9. A mobile terminal comprising:
a storage in which an application which requests a management program for access to an applet stored in an SE is installed; and
a processor configured to execute the management program which controls the application and access of the application to the requested applet.
